# EUROPEAN PATENT SPECIFICATION

(11) **EP 2 276 981 B1**
(45) Date of publication and mention of the grant of the patent: **09.12.2015**
(21) Application number: 08763790.6
(22) Date of filing: 31.03.2008
(51) Int. Cl.: F24J 2/54, H01L 31/042

(54) **SUN TRACKER DEVICE**
SONNENNACHFÜHRUNGSVORRICHTUNG
DISPOSITIF DE POURSUITE SOLAIRE

(43) Date of publication of application: 26.01.2011
(73) Proprietor: Pirelli & C. S.p.A., 20126 Milano (IT)
(72) Inventor: BOFFA, Vincenzo, 20126 Milano (IT); RONCELLA, Fabio, 05010 Montegabbione (Terni) (IT); GALBUSERA, Michele, 23883 Brivio (Como) (IT); PERUZZOTTI, Franco, 20025 Legnano (Milano) (IT); GRASSANO, Giuseppe, 20126 Milano (IT)
(74) Representative: Castiglia, Paolo
(86) International application number: PCT/IT2008/000213
(87) International publication number: WO 2009/122450

(56) References cited:
- EP-A- 1 770 340
- EP-A- 1 925 891
- WO-A-97/27436
- WO-A-2007/109901
- WO-A-2008/068369
- ES-U- 1 050 814
- ES-U- 1 065 033
- US-A- 4 203 426
- US-A- 4 340 031
- US-A1- 2004 216 734

## Description

The present invention relates to a sun tracker device.

Throughout the present description and in the subsequent claims, the expression: "sun tracker device", is used to indicate a device adapted to appropriately orient suitable photoreceiver modules with respect to the sun and to follow the movement of the sun above the horizon from east to west during the day by maintaining the desired orientation of the modules.

Throughout the present description and in the subsequent claims, the expression: "photoreceiver module", is used to indicate any element or device provided with a collection surface of the incident solar radiation.

Sun tracker devices are typically used for converting solar energy into other forms of energy, such as electrical for thermal energy.

Among the known sun tracker devices, the so-called "two-axis" trackers are particularly efficient from the energy conversion standpoint; in these, the solar radiation collection modules are mounted on a frame that can be moved around a vertical axis, each module being in turn movable, separately or simultaneously, around a respective horizontal axis. Such devices allow the orientation of the photoreceiver modules to be modified while the position of the sun changes during its passage from sunrise to sunset, always maintaining a desired orientation, which is that in which the detection surface of such modules is in a position substantially perpendicular to the incident solar light beam. The effective area of the solar radiation collection surface is thus maximised, along with, consequently, the energy output of the device.

Throughout the following present description and in subsequent claims, the expression: "effective area of the solar radiation collection surface", is used to indicate the area of that part of the aforementioned surface which is actually hit by the solar rays and which therefore actually operates in the collection of the solar radiation.

In addition, throughout the following present invention and subsequent claims, the movement of the photoreceiver modules around the vertical axis is often indicated also with the expression: "azimuth movement", while the movement of the photoreceiver modules around the horizontal axis will often be indicated also with the expression "altitude movement".

In the specific case of the conversion of solar energy into electrical energy, the photoreceiver modules typically comprise photovoltaic cells assembled in flat panels. Such cells are adapted to collect the incident solar radiation regardless of the inclination of the solar rays with respect to the direction perpendicular to the detection surface of the cells.

The photovoltaic cells can also be assembled in modules of the concentration-type; such modules in particular comprise an optical group adapted to collect and concentrate, on the cells' photosensitive element, only the light rays coming from the direction normal to the optical group. For the correct functioning of the concentration modules, it is necessary that the direction of the solar rays coming from the solar disc be perfectly orthogonal to the cells' detection surface, with a tolerance of several tenths of degree. Concentration modules of the aforesaid type are described, for example in "Development and performance analysis of the phocus C-module", presented at the International Conference of Solar Concentrators for the Generation of Electricity and Hydrogen, 12-16 March 2007, El Escorian (Spain), and taken from Internet on 28 March 2008, on the site http://www.ene1.portici.enea.it/Pubblicazioni/2007/Madrid_E NEA_Phocus%20Module.pdf.

US 2004/0216734 discloses a sun tracker device comprising a plurality of concave parabolic reflectors mounted on a frame according to a parallel row configuration. The frame is horizontal and is movable on a circular track integral with a support base, so to be able to rotate on the support base around a vertical axis. The reflectors are kinematically connected to each other by means of a mechanical deviation system that permits the movement of the reflectors of each row around a horizontal axis and the synchronous movement of the reflectors of one row with the reflectors of the other rows. The frame rests on four carriages, each provided with three wheels, one of which arranged with the axis orthogonal to that of the other two.

WO 2006/114457 discloses various embodiments of a sun tracker device comprising a plurality of concentration photovoltaic cells arranged in parallel rows. In a first embodiment, the photovoltaic cell rows are grouped in modules installed on a horizontal platform associated with a base plate rotatable around a vertical axis. In a second embodiment, the horizontal platform is in a raised position with respect to the ground. In a third embodiment, the photovoltaic cell rows are installed on a horizontal platform arranged on the top of a pole rotatable around a vertical axis. In a fourth embodiment, the photovoltaic cell rows are installed on a platform rotatable around an axis which is tilted with respect to the horizontal plane. In all the embodiments, each row of modules can be moved around a respective longitudinal axis.

US 4,209,231 discloses a sun tracker device comprising a plurality of mirrors arranged close to each other so to form a rectangular array that can be moved as a single block around a horizontal axis. Such array is associated with a frame that can be moved on a circular track, with circular section, on which four carriages rest, each carriage being provided with two wheels arranged so that the respective axes are orthogonal to each other.

US 4,129,360 discloses a heliostat comprising a reflecting panel associated with a triangular frame fixed to the ground at a vertex thereof and slidable on a track defined by a circular sector, by means of wheels provided at the other vertices thereof. The reflective panel is capable of rotating around a horizontal axis by means of a chain system (or closed ring cable system), in which the chain is associated with the top of the panel and housed in a bar hinged, at a free end thereof, to one of the vertices of the triangular frame.

US 4,883,340 discloses a lighting system for building comprising a system of mirrors installed in fixed position perpendicular to a plane having a fixed inclination of 25° angle with respect to the horizontal plane. The frame that supports the mirrors can be rotated by means of a toothed ring which engages on a motorised toothed pulley.

ES 1050814 U discloses a sun tracker device according to the preamble of claim 1.

The Applicant has devised a new type of sun tracker of the "two-axis" type that is suitable for supporting photoreceiver modules of different type (thus also of the concentration-type), and capable of ensuring high energy yields, irrespective of the type of photoreceiver module supported. In this respect, the Applicant has also contemplated the need to manufacture a sun tracker with limited visual impact and reduced plan dimensions, so to be able to install it even in urban and suburban areas with limited surface extension, at the same time ensuring an easy access to the various components of the tracker so to permit maintenance operations.

The Applicant has observed that the aforementioned needs are in part conflicting.

The Applicant has in fact observed that, in order to attain high energy yields, it is necessary to maximise the solar radiation collection area of the single modules and the density of modules on the installation surface, at the same time taking care to minimise the mutual shading between the various modules of a single tracker and/or between the modules of different trackers of a plant. This need implies a high plan extension of the tracker (in the case in which the modules are arranged on parallel rows on a structure with prevalently horizontal extension) and/or height extension (in the case in which the modules are arranged on a single tilted plane) and a difficult access/attainability of the various components of the tracker during the installation and/or maintenance operations, due to the height of the structure (in the case of tracker with prevalently vertical extension) and to the reduced space between the different trackers of the plant (in the case of tracker with prevalently horizontal extension).

The Applicant has also observed that, depending on the geographical latitude of the installation site of the solar tracker, identical tracker angles of identical photoreceiver modules correspond to different energy yields. This is due to the fact that with the change of latitude, the inclination of the solar rays varies with respect to the Earth, given the same orientation of the modules' detection surface with respect to the sun, and thus the effective area of the solar radiation collection surface varies. According to the Applicant, it is therefore advantageous, with the goal of maximising the energy yield of the tracker, to ensure that the detection surface of the modules is always appropriately oriented with respect to the incident solar rays. This need, however, must be compared with the aforementioned ones to guarantee limited visual impact, reduced plan dimensions and a lack of mutual shading.

The Applicant, with the goal of satisfying the partly conflicting needs set forth above, has found that by mounting the photoreceiver modules of a sun tracker device of the "two-axis" type on a plane tilted by an angle of predetermined amplitude with respect to a support plane of the device, it is possible to reduce the minimum angle of tilt which the single modules must have with respect to the ground so that there is no mutual shading. This allows maximising the energy yield of the device, since the Sun can be pointed to for a longer time during the day, at the same time limiting the size and visual impact of the device and ensuring an easy access to the components of the device in the maintenance operations.

The present invention therefore relates to a sun tracker device as recited in claim 1.

Advantageously, the device of the present invention provides for an azimuth and altitude movement of the photoreceiver modules. It is therefore possible to modify the orientation of the photoreceiver modules with the change of the Sun's position during its passage above the horizon from sunrise to sunset, always maintaining the detecting surfaces of such modules in a position substantially perpendicular to the incident solar light beam.

Still more advantageously, the provision of the photoreceiver modules on a reference plane tilted by a predetermined angle with respect to the support plane of the device allows reducing the minimum tilt angle the single modules must have with respect to the support surface, in order to prevent the mutual shading of the modules. This allows, given the same plan dimensions of the device, a greater density of modules and a correct tracking of the sun for a longer time during the day with respect to the solutions of the prior art, in which the modules are arranged on a plane substantially parallel to the support plane.

With the device of the present invention, finally, an optimal compromise between maximisation of the energy yield of the device and minimisation of the device extension in the vertical direction is achieved, at the same time ensuring an easy access to the components of the device for the maintenance operations.

In particular, in the device of the present invention, the drawbacks of the traditional prevalently vertically extended trackers are minimized - i.e. these require a heavy foundation, and due to the vertical extension, they are sensitive to winds, makes difficult the maintenance operations and have particularly extended shading which obliges large distances between the trackers of a plant. Furthermore, the drawbacks of the traditional prevalently horizontally extended trackers are also minimised - i.e. here the limited space between the trackers of a plant makes difficult the maintenance operations and, in any case, the considerable plan dimensions of the tracker makes the structure complex from the structural and installation standpoint.

The device of the present invention therefore has, in addition to high efficiency from the energy production standpoint, reduced plan dimensions, limited visual impact and ease of access for maintenance operations. It is therefore suitable for also being installed in urban or suburban areas and/or areas with limited surface extension. The aforementioned advantageous characteristics, even if attainable in the case the device of the present invention is of great size, are particularly evident in those cases wherein the device has dimensions such to house photoreceiver modules for an overall peak power of a few KWattp. In these cases, in fact, the device can have very compact dimensions (typically on the order of a few meters), which are compatible for providing a directly onsite installation without the need to use heavy transport and installation machines (crane, in particular). This leads to considerable advantages in terms of production, transport and installation costs.

The present invention can have all or some of the preferred following characteristics.

In a preferred embodiment of the device of the present invention, the tilt angle of the aforementioned reference plane with respect to the support plane has an amplitude greater than 5°. In a further preferred embodiment of the device of the present invention, the aforementioned tilt angle has an amplitude lower than 50°.

In a first particularly preferred embodiment of the device of the present invention, the aforementioned tilt angle has an amplitude between about 5° and about 50°.

In a second particularly preferred embodiment of the device of the present invention, the aforementioned tilt angle has an amplitude between about 10° and about 30°.

In a third particularly preferred embodiment of the device of the present invention, the aforementioned tilt angle has an amplitude between about 15° and about 25°.

In the aforementioned particularly preferred embodiments, the device of the present invention therefore advantageously has an extremely reduced vertical extension, thus overcoming all the drawbacks mentioned above with reference to the trackers of the prior art with a prevalently vertical extension. In particular, the limited height extension of the device of the present invention, in addition to being advantageous in case of installations in zones with strong winds and/or on roofs of buildings, causes a limited visual impact that makes the device of the present invention particularly suitable for installation in urban or suburban zones. In addition thereof, the reduced height of the device of the present invention ensures that cement foundations are not necessary for the stable anchoring of the same on the installation surface.

As an example, considering a tilt of about 15° between the aforementioned reference plane and the support plane, the height of the device of the present invention is therefore approximately equal to about a quarter of the side of the support frame of the photoreceiver modules. For example, considering a square frame having a 4 m side, the height of the device is about 1 m. It is therefore evident how the height extension of the device of the present invention is in fact extremely reduced.

In a preferred embodiment thereof, the device according to the present invention comprises at least one adjustment member of the tilt of the aforementioned reference plane with respect to the support plane.

Advantageously, such feature confers high application and use flexibility to the device of the present invention, permitting the identification of an optimal installation configuration for obtaining high energy yield depending on the latitude of the specific geographic location of the installation site and on the shape of the support surface of the installation site itself.

For example, in the device of the present invention, it is advantageously possible to increase the tilt angle of the aforementioned reference plane in those cases where it is desired to reduce the incidence angle of the solar rays, above which there is no mutual shading, for a certain density of modules on the reference plane. This is particularly advantageous in the installations at high latitudes, in which, particularly in winter, the Sun reaches limited heights on the horizon during the day. On the other hand, it is advantageously possible to reduce the tilt angle of the reference plane in those cases where, for example for aesthetic reasons, it is desired to limit the vertical extension of the device as much as possible. This is particularly advantageous in urban and suburban areas, or in the case of installations exposed to particularly strong winds. From this standpoint, the device of the present invention is particularly adapted to be installed on buildings roofs.

In addition, since the tilt angle of the aforementioned reference plane also determines the necessary spacing between the different modules of the device, it is advantageously possible to increase the tilt angle of the aforementioned reference plane in those cases where it is desired to increase the density of modules on the reference plane, given the same incidence angle of the solar rays, above which there is no mutual shading.

Preferably, the support structure of the device of the present invention comprises a first framework slidably associated with the track and a second framework integrally associated with the first framework and comprising said reference plane.

Advantageously, the photoreceiver modules are therefore associated with a suitable frame (second framework) integral in rotation with a different frame (first framework) that is movable with respect to the fixed base frame. The azimuth movement is therefore achieved in a structurally simple and economical manner.

In a preferred embodiment of the device of the present invention, said at least one adjustment member comprises an arm of variable length that is operatively associated, at a first free end thereof, with the first framework, and is operatively associated at the opposite second free end thereof, with the second framework. Advantageously, the adjustment of the tilt angle of the aforementioned reference plane with respect to the support plane is therefore achieved in a structurally simple and economical manner.

Preferably, the second framework is defined by a plurality of reticular structures, preferably quadrangular, that are mutually associable. Such feature advantageously allows important savings in transport, weight and movement to be achieved.

In a preferred embodiment of the device of the present invention, the support structure comprises a plurality of blocks for the mounting of a plurality of photoreceiver modules, said blocks being associable with said support structure at a plurality of different positions. Advantageously, it is thus possible to vary the density of the modules on the device of the present invention as a function of the different selection criteria, such as for example the shading factor, the quantity of energy desired after the energy conversion, the conformation of the installation surface, etc. Such expedient moreover permits easy mounting on the device of modules with even very different geometric dimensions. In this manner, the application and use flexibility of the device of the present invention is further increased.

Moreover, in the cases where the installation site has a surface of irregular form, such as in the case of installation on building roofs, it is possible to attain an improved fill factor of the available surface by installing more devices of reduced size.

The support structure of the photoreceiver modules is slidably associated with the track by the interposition of three wheels that are angularly spaced from each other. Advantageously, the provision of three wheels ensures stability and a lack of redundancy.

More preferably, the track has, in cross section, an edge profile and each wheel comprises a V-shaped groove coupled with said edge. The track is thus advantageously defined by a common section bar having a cross section provided with a sharp edge for the wheel coupling. Such cross section can be rectangular, square or more preferably L- or C-shaped, so to define an undercut portion adapted to cooperate with an L- or C-shaped element associated with the overlying structure in order to make an anti-overturning system.

In the device of the present invention, each wheel is rotatably mounted on a respective bracket associated with the support structure and extended along a direction tilted by an angle of predetermined amplitude with respect to a substantially vertical plane. In such a manner, the double function is carried out of support of the support structure of the photoreceiver modules and centring of the same on the track during the azimuth movement of the device, without having to employ specific centring elements which would inevitably increase the weigh and complicate the device structure, in addition to hindering maintenance operations.

Preferably, the aforementioned angle has an amplitude equal to 45°.

Preferably, the position of at least one wheel with respect to the track can be adjusted. More preferably, the aforementioned position can be adjusted by means of adjustment of the position of the respective bracket on the support structure. It is thus possible, by means of this technical feature, to perfectly adapt the three wheels to the track profile, thus being able to always obtain the desired stability and centring characteristics.

In a particularly preferred embodiment thereof, the device of the present invention further comprises a second motor group for controlling the movement of said at least one movement.member, the first motor group and the second motor group being mounted on a single mechanical support associated with the aforementioned support structure. Advantageously, the provision of the two motor groups on a single mechanical support makes easier the device installation and maintenance operations, in addition to simplifying the transport of the aforesaid motor groups. It is also advantageously possible to protect both motor groups with a single case. Furthermore, maximum simplicity and savings is attained in the arrangement of the necessary wiring, since it is possible to provide a single canalization for both motor groups at a single zone of the device, such zone being able to be suitably chosen in such a manner that the motor groups do not hinder the maintenance operations.

Preferably, the first and second motor groups are of the same type and have the same size. Such feature permits attaining an advantageous inertia and mass equilibrium between the two motor groups, with consequent advantages in terms of stability.

Preferably, the aforementioned mechanical support is removably associated with the support structure, so to facilitate the possible substitution/removal of the same.

Preferably, the first motor is kinematically coupled to the aforementioned support structure by means of a first belt transmission comprising a toothed belt integrally associated with the track.

Preferably, the second motor group is kinematically coupled to said at least one photoreceiver module by means of a second toothed belt transmission comprising a gravity belt tightener.

Advantageously, the use of toothed belts both for the azimuth movement and for the altitude movement ensures the movement precision required by the application and avoids sliding, even with a low tightening of the belts themselves. The use of smooth belts, on the other hand, would have required much greater tightening levels, attainable by more complex, massive and costly devices, and sliding would have always been possible, since this is an outdoor application in which rain, ice or condensate can easily be present.

In a particularly preferred embodiment thereof, the device of the present invention comprises a plurality of movement members of photoreceiver modules kinematically coupled with each other by means of a plurality of mechanical deviation members adapted to make a synchronous movement of all the movement members.

Preferably, the base frame of the device of the present invention comprises three equidistant support feet. Advantageously, the provision of three support feet ensures high stability, avoiding any redundancy problem.

More preferably, each support foot is height-adjustable. It is thus advantageously possible to stably install the device of the present invention even on not-perfectly-flat surfaces.

In some embodiments of the present invention, the device comprises a plurality of photoreceiver modules, said modules being photovoltaic panels, or more preferably photovoltaic concentration modules.

Preferably, the photovoltaic modules are arranged along a plurality of parallel rows.

Further characteristics and advantages of the present invention will be clearer from the following detailed description of a preferred embodiment thereof, made with reference to the attached drawings. In such drawings:
- Figure 1 is a front perspective schematic view of a preferred embodiment of the device of the present invention;
- Figure 2 is a perspective schematic view of a lower portion of the device of figure 1, from an observation point opposite that of figure 1;
- Figure 3 is a top perspective schematic view of a portion of the device of figure 1 which comprises the portion of 2;
- Figure 4 is a side perspective schematic view of an upper portion of the device of figure 1;
- Figure 5 is an enlarged perspective schematic view of a detail of the device of figure 1;
- Figure 6 is a perspective schematic view of the device of figure 1 from an observation point opposite that of figure 1.

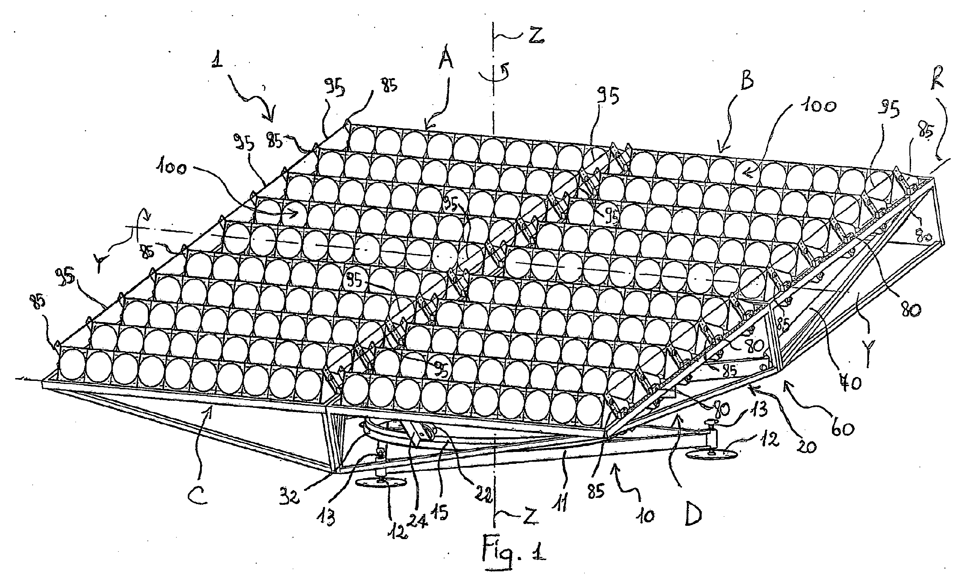

In figure 1, a preferred embodiment of a sun tracker device in accordance with the present invention is indicated in its entirety, for merely exemplifying purposes, with the reference number 1.

The device 1 has a preferred application for the installation of photovoltaic cells (preferably of concentration-type) in a solar energy to electrical energy conversion plant. The device according to the present invention can however also be applied for the installation of solar panels in a solar energy to thermal energy conversion plant.

Device 1 comprises a plurality of photoreceiver modules 100 arranged in parallel rows. For greater illustration clarity, the reference number 100 is associated in the attached figures to only some of the aforementioned modules.

The modules 100 can be moved around a single vertical axis Z-Z in order to make the azimuth movement; each module row is then movable in rotation around a respective horizontal axis Y-Y (only one of which is indicated in figure 1) in order to make the altitude movement of the modules 100.

The photoreceiver modules can be of different type; in the embodiment illustrated in the figures, the modules 100 are photovoltaic concentration modules.

The device 1 can be part of a plant comprising a plurality of identical devices.

The device 1 is designed so that it can be easily mounted even by only two people, without the aid of particular equipment (like cranes), since it is made up of a limited number of pieces that are sufficiently manageable and light. In particular, no component of the device reaches 20 kg weight, and thus, according to current related laws, it can even by moved by a single person.

The device 1 is also conceived to be simply set on the ground or on a flat roof, without preliminary building works. In fact, the particular shape of the device of the present invention, its low centre of gravity, wide support base and very low sensitivity even to very strong winds permit such an installation type. In any case, for improved safety in case of exceptional weather events, the device 1 can be constrained to a robust anchoring point by means of a simple steel chain or cord. This installation mode permits considerable savings during installation, among other things avoiding, in the case of installation on flat building roofs, making holes or other works that are not always appreciated by the building owners.

The device 1 comprises a base frame 10 consisting of a triangular structure 11. The frame 10 is provided with three support feet 12. Each foot is height-adjustable by means of a screw 13. The base frame 10 defines a support plane O of the device 1; such plane O, in the ground installations, is typically horizontal, but it is possible to provide for installations on non-horizontal planes, such as for example in the installations on slanting roofs.

The adjustment of the planarity of the base frame 10 can be easily achieved onsite in a few seconds, by means of the aid of a simple level, by operating on two of the three screws 13.

On the base frame 10, a circular track 15 is fixed which supports the movable part of the device 1. In the embodiment illustrated in the attached figures, the circular track 15 is defined by a section bar having a rectangular cross section.

In a particularly preferred embodiment of the device 1, the track section bar 15 instead has an L- or C-shaped cross section, so to define an undercut portion adapted to cooperate with an L- or C-shaped element associated with the overlying structure in order to make an anti-overturning system.

A support structure 20 of the photoreceiver modules 100 is slidably mounted on the track 15.

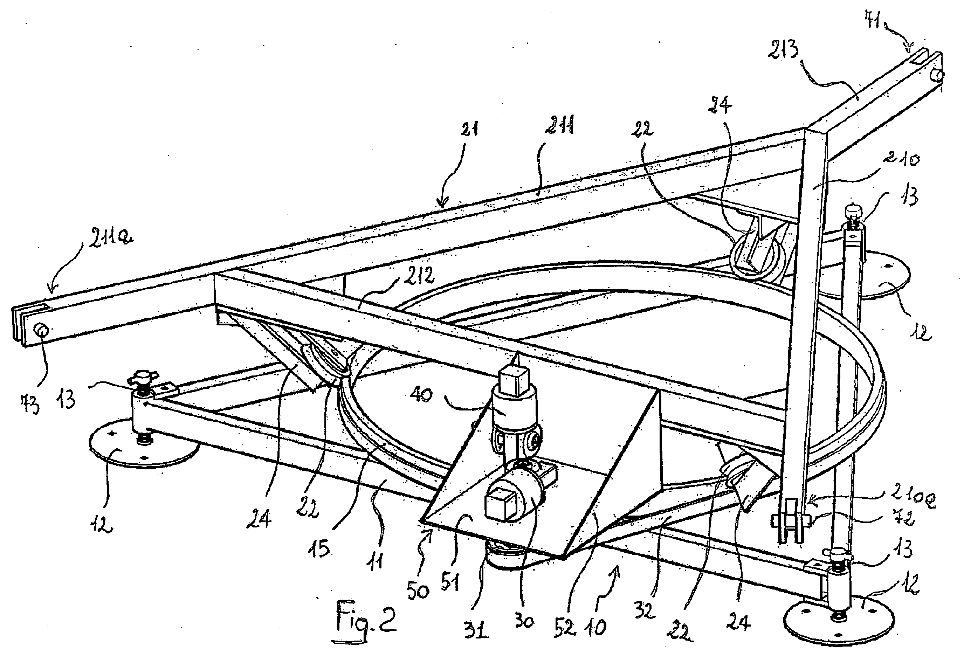

The support structure 20 comprises, at a lower portion thereof, a triangular framework 21, defined by three arms 210, 211, and 212. Such framework 21, visible in detail in figure 2, is provided with three angularly equidistant wheels 22, each placed at a vertex of the triangular framework 21.

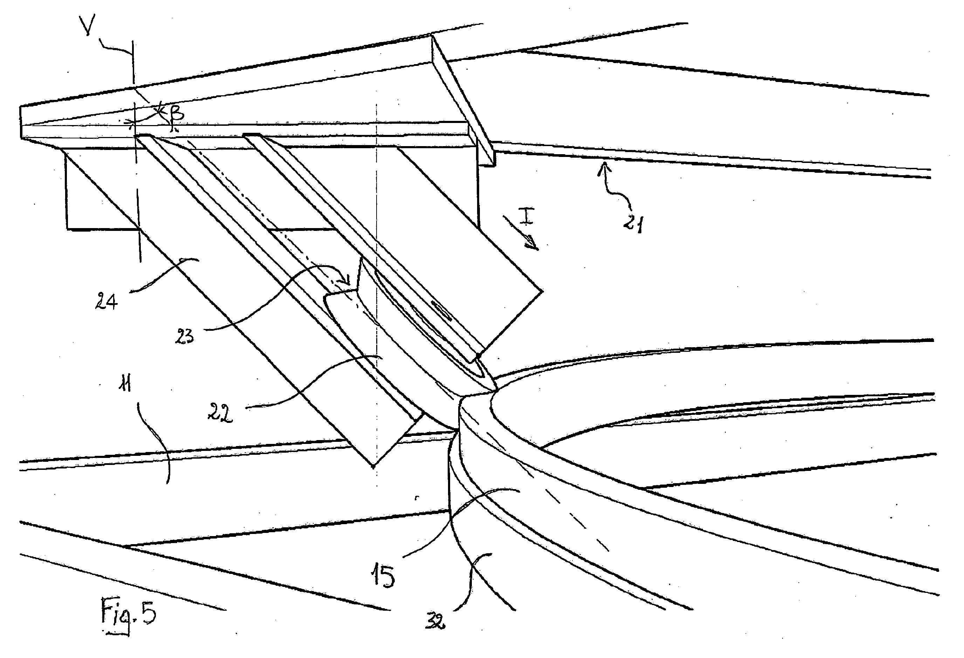

As is clearer in the detail of figure 5, the wheels 22 are provided with a V-shaped groove 23 slidingly coupled with one edge of the track 15.

The wheels 22 are also rotatably mounted by means of suitable bearings (not visible in the attached figures), on respective brackets 24 associated with the vertices of the triangular framework 21. The brackets 24 are extended along a direction (indicated with the arrow I in figure 5) that is tilted with respect to a vertical plane V by a predetermined angle β (this being indicated in figure 5 too) preferably having an amplitude equal to about 45°.

The position of at least one of the brackets 24 on the framework 21 can be adjusted, so to be able to perfectly adapt the wheels 24 to the track 15.

Advantageously, the provision of tilted wheels 24 permits avoiding the use of other mechanical elements for centring the support structure 20, such as for example a central pin, in this manner leaving the cylindrical space enclosed by the track 15 completely free. Such free space is particularly useful as an easy passage for the wires of the motor groups for the azimuth and altitude movements of the modules 100 and can also host the possible mechanical safety constraints mentioned above (steel wire or chain). In such space, possible boxes can also be placed for the conditioning electronics of the current produced by the photoreceiver modules, in the case they are photovoltaic panels.

As illustrated in figure 2, the azimuth and altitude movement of the modules 100 is attained by means of motor groups 30 and 40, both installed on a single mechanical support 50 that is removably associated with the framework 21. Such mechanical support 50 in particular comprises a bracket plate 51 which can be protected by a case (not illustrated).

The two motor groups 30, 40 are preferably of the same type and have the same size. Both the motor groups 30, 40 control the respective movements by means of respective belt transmission systems.

In particular, the motor group 30 controls the azimuth movement. It comprises a drive shaft projecting below the bracket plate 51 and on which a toothed pulley 31 is fit. A toothed belt 32 is engaged on such pulley 31, belt 32 operating between the pulley 31 and a smooth pulley 33 mounted on the lower face of the bracket plate 51 close to the toothed pulley 31.

The toothed belt 32 is arranged with the toothing turned on the side opposite the track 15, i.e. towards the outside of the device 1. The smooth face of the belt 32 therefore lies on the lateral surface of the track 15 and on the smooth pulley 33, while the toothed face of the belt 32 is engaged on the toothed pulley 31.

The belt 32 is integrally bound to the track 15, by means of a suitable locking constraint. In operation, the toothed pulley 31, engaging with the toothed belt 32 bound to the track 15, is moved around the track 15 by being wound on the belt 32, moving the framework 21 and thus the support structure 20 of the modules 100 in rotation around the vertical axis Z-Z. The anchoring zone of the belt 32 to the track 15 is oriented towards the south, so that the pulley 31 never interferes with the locking constraint.

In substance, the reversed belt solution described above works in an equivalent manner to a solution wherein the toothed pulley 31 is engaged on a big toothed wheel formed on the track 15, for example by means of milling or pressure die-casting. Such solution, however, would be more complex from the structural standpoint and therefore more expensive.

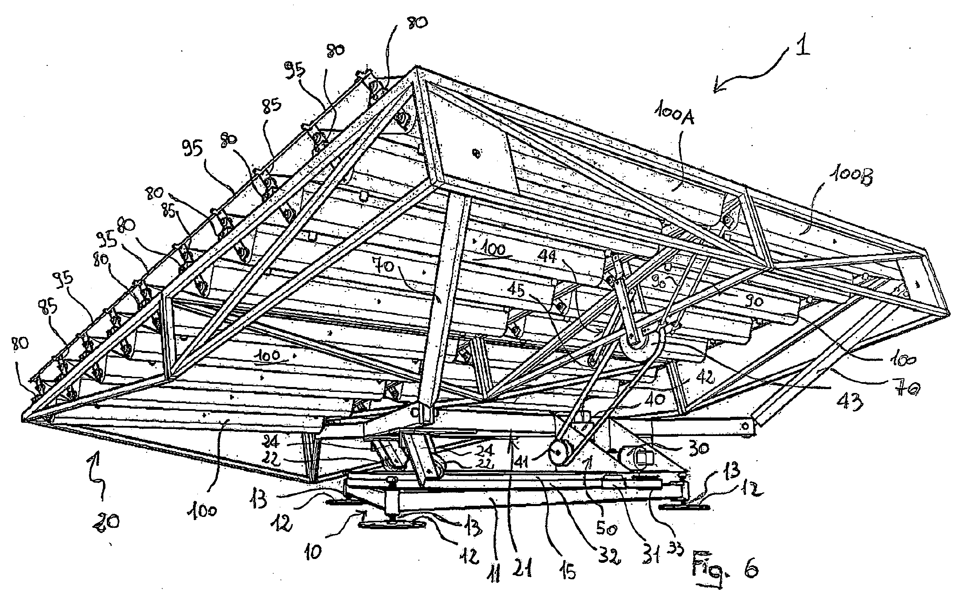

The motor group 40, on the other hand, controls the height movement of the modules 100. As illustrated in figure 6, the motor group 40 comprises a drive shaft projecting from a side surface 52 of the support 50, on which a toothed pulley 41 is fit. The drive shaft of the motor group 40 is therefore extended along a direction orthogonal to that in which the drive shaft of the motor group 30 is extended.

A toothed belt 42 engages on the toothed pulley 41, such belt 42 operating between the pulley 41 and a toothed pulley 43 mounted integral with the support structure 20 of the modules 100, as described better below. The tightening of the toothed belt 42 is attained by means of a gravity belt tightener 44, comprising a free pulley 45 provided with a suitable ballast that, due to the force of gravity, pushes the free pulley 45 against the belt 42, tightening it in an appropriate manner.

Preferably, the toothed pulley 43 has a diameter greater than that of the toothed pulley 41, so to introduce a motion reduction factor.

As illustrated in figures 1, 3, 4 and 6, the support structure 20 comprises, at an upper portion thereof, a framework 60 on which the photoreceiver modules 100 are mounted.

The framework 60 is made by means of a tubular trellis, so to define a rigid and light structure. In particular, the framework 60 is defined by a modular structure formed by joining together a plurality of single reticular structures.

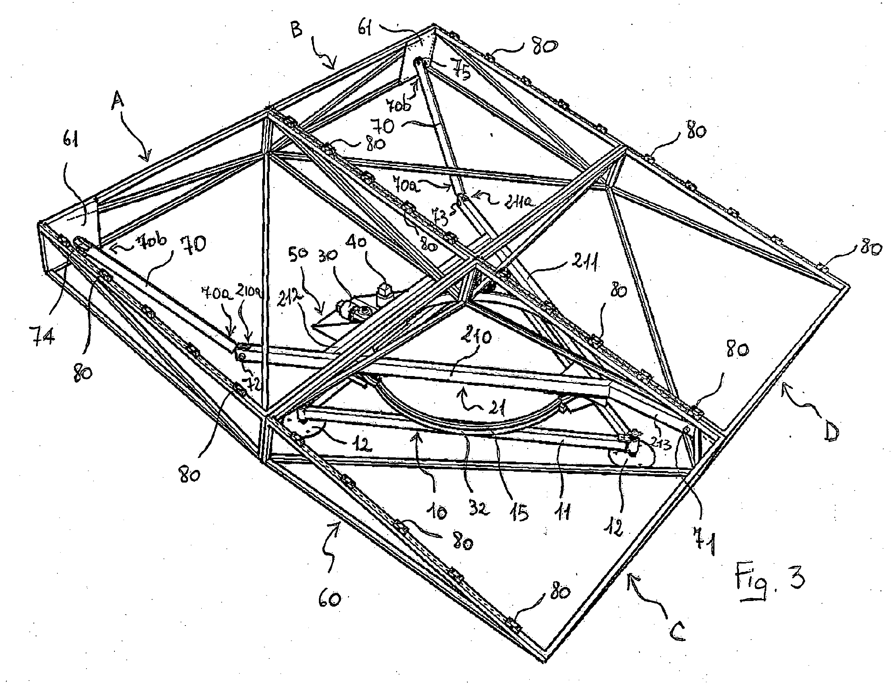

In the specific example illustrated in the attached figures, the framework 60 is made by means of four different reticular structures, indicated in figures 1 and 3 with A, B, C and D. Preferably, each of these reticular structures has a square shape in a plan view, so that the frame 60 also has a square shape in a plan view.

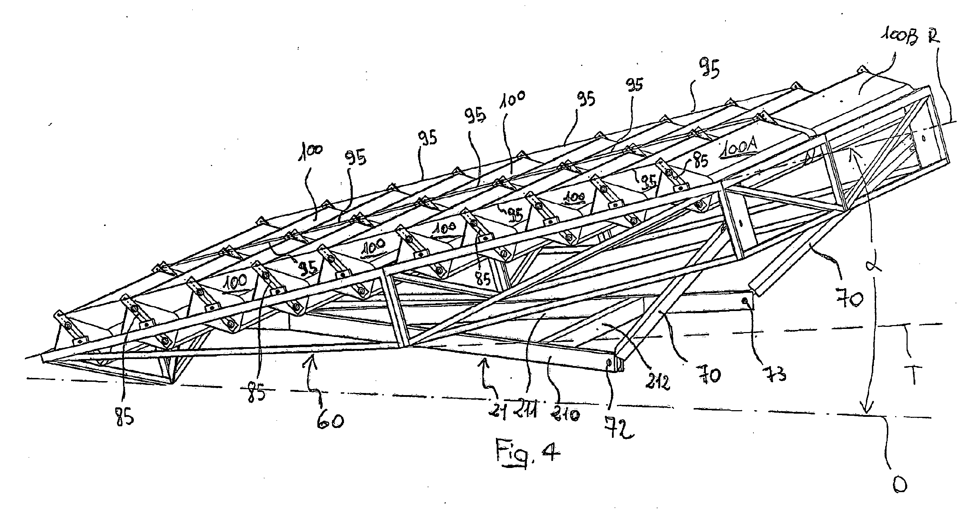

As illustrated in figure 4, the framework 60 is defined between a base plane T, in the illustrated example substantially parallel to the support plane O (in general, it could however have a tilt with respect to said support plane O) and a top plane R that is tilted with respect to the base plane T. The top plane R defines the coupling plane of the photoreceiver modules 100 to the framework 60. In the illustrated example, the top plane R is tilted by an angle of about 15° with respect to the base plane T. Such angle can however a different value.

The aforementioned tilt is obtained by making two of the four reticular structures A, B, C and D (structures C and D in figure 1 and 3) with a triangular lateral profile and the other two (structures A and B in figure 1 and 2) with a rectangular lateral profile.

The framework 60 is coupled to the framework 21 so to be integral with the framework 21 in the azimuth movement.

In particular, as illustrated in figure 3, the frame 60 is coupled to the framework 21 at a hinge 71 provided on a free end portion of an arm 213 extended from the junction vertex of the arms 210 and 211. In particular, the hinge 71 is provided on the contacting sides of the reticular structures C and D.

On the opposite side of the pin 71 with respect to the base frame 10, the frame 60 is coupled to the framework 21 by means of a pair of arms 70 of adjustable length.

In particular, the arms 70 are coupled, at first free ends 70a thereof, to respective hinges 72, 73 provided at free ends 210a and 211a of the arms 210, 211. At the opposite free ends 70b thereof, the arms 70 are coupled to respective hinges 74, 75 provided on suitable plates 61 associated with the framework 60. The hinges 74 and 75 are provided on the end sides of the reticular structures A and B.

In practice, the arms 70 of adjustable length, interfacing directly with the hinges 72, 73 located on two vertices of the triangular framework 21 and indirectly (by means of the framework 60) with the hinge 74 located on the other vertex of the triangular framework 21, determine the amplitude of the angle α between the top plane R and the support plane O of the device (figure 4). By varying the length of the arms 70, the rotation of the framework 60 around the axis of the hinge 71 is attained, in this manner varying the amplitude of the angle α.

Preferably, the angle α has a minimum amplitude in the range between about 10° and about 30°, and still more preferably in the range between about 15° and about 25°.

The framework 60 is moreover provided, on the upper face thereof, with a plurality of blocks 80 for the mounting of the photoreceiver modules 100. For illustration clarity, in the attached figures, the reference number 80 is associated only with several of the aforementioned blocks.

The blocks 80 are associated with respective holes of a plurality of holes formed on the upper face of the framework 60.

The holes on the upper face of the framework 60 are such that the position of the blocks 80 on the framework 60 can be varied, so to vary the mutual spacing of the modules 100.

The blocks 80 are preferably made of a synthetic material and are appropriately drilled for housing a hinging axis of the modules 100.

The height movement of the modules 100 occurs in the following manner.

The modules 100 of the various parallel rows are synchronously moved by means of respective movement members 85 associated with the blocks 80, so to be rotatable around respective horizontal axes Y-Y that are parallel to each other. For more illustration clarity, in the attached figures, the reference number 85 is associated only with several of the movement members.

The aforementioned movement, as already said, is controlled by the motor group 40, which controls the rotation of the toothed pulley 43 by means of the toothed belt 42.

As illustrated in figure 6, a pair of deviation rods 90 are coupled in an eccentric manner to the pulley 43, such rods 90 being connected to a pair of modules 100 (in figure 6 the modules of such pair of modules are indicated with 100A and 100B) by means of the respective movement members 85. Such modules in turn transmit the movement to the other module rows by means of further deviation rods 95. For greater illustration clarity, the reference number 95 is associated only with some of the aforesaid deviation rods.

Substantially, both the motion transmission system from the pulley 43 to the pair of modules 100A, 100B and that from the pair of modules 100A, 100B to the other rows of modules is of the crank-connecting rod type.

The deviation rods are provided with an adjustment system (not visible), defined by a screw and a pair of nuts and counter nuts, for adjusting the tilt of each photovoltaic module 100 with respect to the adjacent one so to ensure the perfect alignment of all modules 100.

From that described above, it is clear how the device 1 of the present invention allows modifying the orientation of the photoreceiver modules 100 while the position of the sun during its passage from sunrise to sunset changes, always maintaining a desired orientation, which is that in which the detection surface of such modules is in a position substantially perpendicular to the incident solar light. The use of such device is therefore particularly advantageous in the case in which the photoreceiver modules 100 are photovoltaic concentration modules. For the correct functioning of the concentration modules, it is in fact necessary that the direction of the incident solar rays on the modules is perfectly orthogonal to the detection surface of the modules themselves, with a tolerance of some tenths of a degree, and the device according to the present invention is capable of satisfying this particular need. Finally, the device of the present invention allows achieving an optimal compromise between maximisation of the energy yield of the device and minimisation of the size of the device, at the same time ensuring an easy access to the components of the device for the maintenance operations.

Naturally, a man skilled in the art can make further modifications and variations to the above-described finding, with the goal of satisfying specific and contingent needs, such variants and modifications in any case being within the scope of protection as defined by the attached claims.

## Claims

1. Sun tracker device (1), comprising:
- a base frame (10) provided with a track (15) that is at least in part circular, said base frame (10) defining a support plane (0);
- a support structure (20) of at least one photoreceiver module (100), the support structure (20) being slidably associated with the track (15) and comprising a reference plane (R) for the coupling to said at least one photoreceiver module (100);
- a first motor group (30) for controlling the movement of the support structure (20) on the track (15) around a substantially vertical axis (Z-Z);
- at least one movement member (85) of said at least one photoreceiver module (100) around a respective substantially orthogonal axis (Y-Y);
wherein said reference plane (R) is tilted, with respect to said support plane (O), by an angle of predetermined amplitude (α); **characterized in that**
the support structure (20) is slidably associated with the track (15) by the interposition of three wheels (22) which are angularly equidistant from each other;
each wheel (22) is rotatably mounted on a respective bracket (24) associated with the support structure (20) and extended along a direction (I) tilted by an angle (β) of predetermined amplitude with respect to a substantially vertical plane (V); and
each wheel (22) is tilted with respect to said substantially vertical plane (V) by said angle (β) of predetermined amplitude.

2. Device (1) according to claim 1, wherein said angle has an amplitude (α) between about 5° and about 50°.

3. Device (1) according to claim 1 or 2, comprising at least one adjustment member (70) of the tilt of said reference plane (R) with respect to the support plane (O).

4. Device (1) according to any one of the previous claims, wherein the support structure (20) comprises a first framework (21) slidably associated with the track (15) and a second framework (60) integrally associated with the first framework (21) and comprising said reference plane (R).

5. Device (1) according to claim 4 when depending on claim 3, wherein said at least one adjustment member (70) comprises an arm (70) of variable length, operatively associated, at a first free end thereof (70a), with the first framework (21) and, at the opposite second free end (70b) thereof, with the second framework (60).

6. Device (1) according to claim 4 or 5, wherein said second framework (60) is defined by a plurality of mutually associable reticular structures (A, B, C, D).

7. Device (1) according to any one of the previous claims, wherein the support structure (20) comprises a plurality of blocks (80) for the mounting of a plurality of photoreceiver modules (100), said blocks (80) being associable with said support structure (20) at a plurality of different positions.

8. Device (1) according to any one of the previous claims 8, wherein the track (15) has an edge profile in cross section, and each wheel (22) comprises a V-shaped groove (23) coupled with said edge.

9. Device (1) according to any one of the previous claims, wherein said angle (β) has an amplitude equal to about 45°.

10. Device (1) according to any one of the previous claims, wherein the position of at least one wheel (22) with respect to the track (15) is adjustable.

11. Device (1) according to claim 10, wherein said position is adjustable by adjusting the position of the respective bracket (24) on the support structure (20).

12. Device (1) according to any one of the previous claims, further comprising a second motor group (40) for controlling the movement of said at least one movement member (85), wherein the first motor group (30) and the second motor group (40) are mounted on a single mechanical support (50) associated with said support structure (20).

13. Device (1) according to claim 12, wherein the second motor group (40) is of the same type and has the same size as the first motor group (30).

14. Device (1) according to claim 12 or 13, wherein said mechanical support (50) is removably associated with the support structure (20).

15. Device (1) according to any one of the previous claims, wherein said first motor (30) is kinematically coupled to said support structure (20) by means of a first belt transmission (31, 32, 33) comprising a toothed belt (32) integrally associated with the track (15).

16. Device (1) according to any one of claims 12 to 15, wherein the second motor group (40) is kinematically coupled to said at least one photoreceiver module (100) by means of a second toothed belt transmission (41, 42, 43, 44, 45) comprising a gravity belt tightener (44).

17. Device (1) according to claim 16, comprising a plurality of movement members (85) of the photoreceiver modules (100) kinematically coupled to each other by means of a plurality of mechanical deviation members (90, 95) adapted to make a synchronous movement of all the movement members (85).

18. Device (1) according to any one of the previous claims, wherein the base frame (10) comprises three support feet (12) that are equidistant from each other.

19. Device (1) according to claim 18, wherein each support foot (12) is height-adjustable.

20. Device (1) according to any one of the previous claims, comprising a plurality of photovoltaic panels (100).

21. Device (1) according to any one of the previous claims, comprising a plurality of photovoltaic concentration modules (100).

22. Device (1) according to any one of the previous claims, comprising a plurality of photoreceiver modules arranged along a plurality of parallel rows.

## Patentansprüche

1. Sonnennachführungsvorrichtung (1), die Folgendes umfasst:
- einen Grundrahmen (10), der mit einer Schiene (15) versehen ist, die zumindest zum Teil kreisförmig ist, wobei der Grundrahmen (10) eine Trägerebene (O) definiert;
eine Trägerstruktur (20) für zumindest ein Lichtempfängermodul (100), wobei die Trägerstruktur (20) der Schiene (15) gleitend zugeordnet ist und eine Referenzebene (R) für die Kopplung mit dem zumindest einen Lichtempfängermodul (100) umfasst;
- eine erste Motorgruppe (30) zur Steuerung der Bewegung der Trägerstruktur (20) an der Schiene (15) um eine im Wesentlichen vertikale Achse (Z-Z);
- zumindest ein Bewegungselement (85) für das zumindest eine Lichtempfängermodul (100) um eine jeweilige im Wesentlichen orthogonale Achse (Y-Y);
wobei die Referenzebene (R) in Bezug auf die Trägerebene um einen Winkel vorbestimmter Größe (α) gekippt ist,
**dadurch gekennzeichnet, dass**
die Trägerstruktur (20) der Schiene (15) unter Zwischenschaltung von drei Rädern (22) gleitend zugeordnet ist, die winkelmäßig in gleichen Abständen voneinander angeordnet sind;
jedes Rad (22) drehbar an einer jeweiligen Halterung (24) montiert ist, die der Trägerstruktur (20) zugeordnet ist und sich entlang einer Richtung (I) erstreckt, die um einen Winkel (β) vorbestimmter Größe in Bezug auf eine im Wesentlichen vertikale Ebene (V) gekippt ist; und
jedes Rad (22) in Bezug auf die im Wesentlichen vertikale Ebene (V) um den Winkel (β) vorbestimmter Größe gekippt ist.

2. Vorrichtung (1) nach Anspruch 1, wobei der Winkel eine Größe (α) zwischen etwa 5° und etwa 50° aufweist.

3. Vorrichtung (1) nach Anspruch 1 oder 2, umfassend zumindest ein Einstellelement (70) für die Kippneigung der Referenzebene (R) in Bezug auf die Trägerebene (O).

4. Vorrichtung (1) nach einem der vorhergehenden Ansprüche, wobei die Trägerstruktur (20) einen ersten Rahmen (21) umfasst, der der Schiene (15) gleitend zugeordnet ist, sowie einen zweiten Rahmen (60), der dem ersten Rahmen (21) einteilig zugeordnet ist und die Referenzebene (R) umfasst.

5. Vorrichtung (1) nach Anspruch 4, sofern abhängig von Anspruch 3, wobei das zumindest eine Einstellelement (70) einen Arm (70) variabler Länge umfasst, der an einem ersten freien Ende (70a) davon dem ersten Rahmen (21) und, an dem gegenüberliegenden zweiten freien Ende (70b) davon, dem zweiten Rahmen (60) operativ zugeordnet ist.

6. Vorrichtung (1) nach Anspruch 4 oder 5, wobei der zweite Rahmen (60) durch eine Vielzahl von einander gegenseitig zuordenbaren netzartigen Strukturen (A, B, C, D) definiert wird.

7. Vorrichtung (1) nach einem der vorhergehenden Ansprüche, wobei die Trägerstruktur (20) eine Vielzahl von Blöcken (80) zur Befestigung einer Vielzahl von Lichtempfängermodulen (100) umfasst, wobei die Blöcke (80) der Trägerstruktur (20) an einer Vielzahl von unterschiedlichen Positionen zuordenbar sind.

8. Vorrichtung (1) nach einem der vorhergehenden Ansprüche, wobei die Schiene (15) im Querschnitt ein Randprofil aufweist, und jedes Rad (22) eine V-förmige Nut (23) aufweist, die mit dem Rand gekoppelt ist.

9. Vorrichtung (1) nach einem der vorhergehenden Ansprüche, wobei der Winkel (β) eine Größe von etwa gleich 45° aufweist.

10. Vorrichtung (1) nach einem der vorhergehenden Ansprüche, wobei die Stellung von zumindest einem Rad (22) in Bezug auf die Schiene (15) einstellbar ist.

11. Vorrichtung (1) nach Anspruch 10, wobei die Stellung eingestellt werden kann, indem die Stellung der jeweiligen Halterung (24) an der Trägerstruktur (20) eingestellt wird.

12. Vorrichtung (1) nach einem der vorhergehenden Ansprüche, des Weiteren umfassend eine zweite Motorgruppe (40) zur Steuerung der Bewegung des zumindest einen Bewegungselements (85), wobei die erste Motorgruppe (30) und die zweite Motorgruppe (40) an einem einzelnen mechanischen Träger (50) befestigt sind, der der Trägerstruktur (20) zugeordnet ist.

13. Vorrichtung (1) nach Anspruch 12, wobei die zweite Motorgruppe (40) vom selben Typ ist und dieselbe Größe aufweist wie die erste Motorgruppe (30).

14. Vorrichtung (1) nach Anspruch 12 oder 13, wobei der mechanische Träger (50) der Trägerstruktur (20) abnehmbar zugeordnet ist.

15. Vorrichtung (1) nach einem der vorhergehenden Ansprüche, wobei der erste Motor (30) kinematisch mit der Trägerstruktur (20) mittels einer ersten Riemenübertragung (31, 32, 33) gekoppelt ist, die einen Zahnriemen (32) umfasst, der der Schiene (15) einteilig zugeordnet ist.

16. Vorrichtung (1) nach einem der Ansprüche 12 bis 15, wobei die zweite Motorgruppe (40) kinematisch mit dem zumindest einen Lichtempfängermodul (100) mittels einer zweiten Zahnriemenübertragung (41, 42, 43, 44, 45) gekoppelt ist, die einen Schwerkraft-Riemenspanner (44) umfasst.

17. Vorrichtung (1) nach Anspruch 16, umfassend eine Vielzahl von Bewegungselementen (85) für die Lichtempfängermodule (100), die miteinander kinematisch mittels einer Vielzahl von mechanischen Auslenkelementen (90, 95) gekoppelt sind, die dazu geeignet sind, eine synchrone Bewegung aller Bewegungselemente (85) auszuführen.

18. Vorrichtung (1) nach einem der vorhergehenden Ansprüche, wobei der Grundrahmen (10) drei Stützfüße (12) umfasst, die in gleichen Abständen voneinander angeordnet sind.

19. Vorrichtung (1) nach Anspruch 18, wobei jeder Stützfuß (12) höhenverstellbar ist.

20. Vorrichtung (1) nach einem der vorhergehenden Ansprüche, umfassend eine Vielzahl von Photovoltaik-Paneelen (100).

21. Vorrichtung (1) nach einem der vorhergehenden Ansprüche, umfassend eine Vielzahl von Photovoltaik-Konzentratormodulen (100).

22. Vorrichtung (1) nach einem der vorhergehenden Ansprüche, umfassend eine Vielzahl von Lichtempfängermodulen, die entlang einer Vielzahl von parallelen Reihen angeordnet sind.

## Revendications

1. Dispositif de poursuite solaire (1), comprenant :
- un cadre de base (10) pourvu d'une piste (15) qui est au moins en partie circulaire, ledit cadre de base (10) définissant un plan de maintien (O) ;
- une structure de maintien (20) d'au moins un module de photorécepteurs (100), la structure de maintien (20) étant associée en coulissement à la piste (15) et comprenant un plan de référence (R) pour le couplage audit au moins un module de photorécepteurs (100) ;
un premier groupe moteur (30) pour commander le mouvement de la structure de maintien (20) sur la piste (15) autour d'un axe essentiellement vertical (Z-Z) ;
- au moins un élément de mouvement (85) dudit au moins un module de photorécepteurs (100) autour d'un axe respectif essentiellement orthogonal (Y-Y) ;
dans lequel ledit plan de référence (R) est incliné, par rapport audit plan de maintien (0), d'un angle d'amplitude prédéterminée (α) ; **caractérisé en ce que**
la structure de maintien (20) est associée en coulissement à la piste (15) par l'interposition de trois roues (22) qui sont angulairement équidistantes les unes par rapport aux autres ;
chaque roue (22) est montée en rotation sur un support respectif (24) associé à la structure de maintien (20) et s'étend le long d'une direction (I) inclinée d'un angle (β) d'amplitude prédéterminée par rapport à un plan essentiellement vertical (V) ; et
chaque roue (22) est inclinée par rapport audit plan essentiellement vertical (V) dudit angle (β) d'amplitude prédéterminée.

2. Dispositif (1) selon la revendication 1, dans lequel ledit angle a une amplitude (α) entre environ 5° et environ 50°.

3. Dispositif (1) selon la revendication 1 ou 2, comprenant au moins un élément de réglage (70) de l'inclinaison dudit plan de référence (R) par rapport au plan de maintien (O).

4. Dispositif (1) selon l'une quelconque des revendications précédentes, dans lequel la structure de maintien (20) comprend un premier châssis (21) associé en coulissement à la piste (15) et un deuxième châssis (60) entièrement associé au premier châssis (21) et comprenant ledit plan de référence (R).

5. Dispositif (1) selon la revendication 4 lorsqu'elle dépend de la revendication 3, dans lequel ledit au moins un élément de réglage (70) comprend un bras (70) de longueur variable, associé de manière fonctionnelle, au niveau d'une première extrémité libre (70a) de celui-ci, au premier châssis (21) et, au niveau de la deuxième extrémité libre opposée (70b) de celui-ci, au deuxième châssis (60).

6. Dispositif (1) selon la revendication 4 ou 5, dans lequel ledit deuxième châssis (60) est défini par une pluralité de structures réticulaires pouvant être associées mutuellement (À, B, C, D).

7. Dispositif (1) selon l'une quelconque des revendications précédentes, dans lequel la structure de maintien (20) comprend une pluralité de blocs (80) pour le montage d'une pluralité de modules de photorécepteurs (100), lesdits blocs (80) pouvant être associés à ladite structure de maintien (20) au niveau d'une pluralité de différentes positions.

8. Dispositif (1) selon l'une quelconque des revendications précédentes, dans lequel la piste (15) a un profil de bord en coupe transversale, et chaque roue (22) comprend une rainure en forme de V (23) couplée audit bord.

9. Dispositif (1) selon l'une quelconque des revendications précédentes, dans lequel ledit angle (β) a une amplitude égale à environ 45°.

10. Dispositif (1) selon l'une quelconque des revendications précédentes, dans lequel la position d'au moins une roue (22) par rapport à la piste (15) est réglable.

11. Dispositif (1) selon la revendication 10, dans lequel ladite position est réglable en réglant la position du support respectif (24) sur la structure de maintien (20).

12. Dispositif (1) selon l'une quelconque des revendications précédentes, comprenant en outre un deuxième groupe moteur (40) pour commander le mouvement dudit au moins un élément de mouvement (85), dans lequel le premier groupe moteur (30) et le deuxième groupe moteur (40) sont montés sur un élément de maintien mécanique unique (50) associé à ladite structure de maintien (20).

13. Dispositif (1) selon la revendication 12, dans lequel le deuxième groupe moteur (40) est du même type et a la même taille que le premier groupe moteur (30).

14. Dispositif (1) selon la revendication 12 ou 13, dans lequel ledit élément de maintien mécanique (50) est associé de manière amovible à la structure de maintien (20).

15. Dispositif (1) selon l'une quelconque des revendications précédentes, dans lequel ledit premier moteur (30) est couplé cinématiquement à ladite structure de maintien (20) au moyen d'une première transmission à courroie (31, 32, 33) comprenant une courroie dentée (32) entièrement associée à la piste (15).

16. Dispositif (1) selon l'une quelconque des revendications 12 à 15, dans lequel le deuxième groupe moteur (40) est couplé cinématiquement audit au moins un module de photorécepteurs (100) au moyen d'une deuxième transmission à courroie dentée (41, 42, 43, 44, 45) comprenant un tendeur de courroie de gravité (44).

17. Dispositif (1) selon la revendication 16, comprenant une pluralité d'éléments de mouvement (85) des modules de photorécepteurs (100) couplés cinématiquement les uns aux autres au moyen d'une pluralité d'éléments de déviation mécaniques (90, 95) adaptés pour effectuer un mouvement synchrone de tous les éléments de mouvement (85).

18. Dispositif (1) selon l'une quelconque des revendications précédentes, dans lequel le cadre de base (10) comprend trois pieds de maintien (12) qui sont équidistants les uns des autres.

19. Dispositif (1) selon la revendication 18, dans lequel chaque pied de maintien (12) est réglable en hauteur.

20. Dispositif (1) selon l'une quelconque des revendications précédentes, comprenant une pluralité de panneaux photovoltaïques (100).

21. Dispositif (1) selon l'une quelconque des revendications précédentes, comprenant une pluralité de modules de concentration photovoltaïques (100).

22. Dispositif (1) selon l'une quelconque des revendications précédentes, comprenant une pluralité de modules de photorécepteurs agencés le long d'une pluralité de rangées parallèles.
